# FASCICULE DE BREVET EUROPEEN

(11) **EP 1 935 302 B1**
(45) Date de publication et mention de la délivrance du brevet: **09.06.2010**
(21) Numéro de dépôt: 07356164.9
(22) Date de dépôt: 19.11.2007
(51) Int. Cl.: A47J 43/07

(54) **Boîte de rangement pour mixeur ménager de type plongeant**
Aufbewahrungsbehälter für einen Haushaltsmixer
Storage case for immersed domestic mixer

(30) Priorité: 22.12.2006 FR 0611245
(43) Date de publication de la demande: 25.06.2008
(73) Titulaire: Seb SA, 69130 Ecully (FR)
(72) Inventeur: Lecerf, Joël, 50190 Périers (FR); Balan, Lionel, 50000 Saint Lô (FR); Herbert, Philippe, 50290 Bréhal (FR)
(74) Mandataire: Kiehl, Hubert

(56) Documents cités:
- GB-A- 2 347 095
- US-A- 4 575 255

## Description

La présente invention concerne le domaine technique général des mixeurs ménagers du type plongeant et se rapporte plus particulièrement à une boîte de rangement pour accessoires de pied de mixage.

Les pieds de mixage sont bien connus et utilisés couramment. Ils sont accouplés à un boîtier renfermant un moteur et comprennent un fût cylindrique dont la partie inférieure comporte une cloche renfermant un outil de travail solidaire d'un arbre dont l'extrémité supérieure est accouplée à un arbre de sortie du moteur. Entraîné à grande vitesse, l'outil est plongé à l'intérieur des aliments à préparer et il coupe, mélange, émulsionne, etc.

Afin de faciliter le nettoyage et de permettre l'utilisation de différents types d'outils, il est connu de monter l'outil coupant de manière facilement amovible sur l'arbre du pied de mixage, le démontage de l'outil s'effectuant manuellement sans nécessiter d'outil spécifique. Ainsi, il est connu de la demande de brevet FR 05 10120, déposée par la demanderesse, un pied de mixage dans lequel l'outil coupant est associé à une cloche de préhension de sorte que l'outil peut être très facilement changé. Cet appareil présente l'avantage de pouvoir être proposé avec une gamme d'accessoires, constituée par exemple par des outils de différentes formes, que l'utilisateur peut très facilement monter en fonction de la préparation à réaliser.

Un tel produit, vendu avec de nombreux outils coupants, présente cependant l'inconvénient d'être plus difficile à ranger, les outils risquant d'être perdus ou rangés en vrac dans un tiroir avec le risque pour l'utilisateur de se couper s'il attrape sans précaution les outils coupants.

Il est connu des documents US 4575 255 ou GB 2 347 095 des pieds mixeurs comportant une plateforme support pour ranger les outils, cependant de telles plateformes présentent l'inconvénient d'être relativement encombrantes et n'empêchent pas l'utilisateur de venir au contact des outils. De plus, de telles plateformes ne protègent pas les outils contre la poussière.

L'invention qui suit vise à pallier ces inconvénients en proposant une boîte de rangement pour accessoires de mixeur plongeant qui soit peut encombrante et qui assure une bonne protection des accessoires.

Le but de l'invention est atteint par une boîte de rangement pour mixeur ménager de type plongeant, le mixeur comportant un boîtier moteur et un pied de mixage muni d'une cloche de protection pouvant recevoir un outil de travail amovible, caractérisé en ce que la boîte définit un volume sensiblement fermé comportant un espace de rangement pouvant recevoir au moins un outil de travail, et comporte des moyens d'accouplement avec un élément de forme allongée, constitué par le boîtier moteur ou par le pied de mixage, permettant l'accouplement de la boîte de rangement dans une position dans laquelle la boîte s'étend parallèlement à la direction longitudinale dudit élément de forme allongée.

Selon une autre caractéristique de l'invention, la boîte peut être accouplée à la partie centrale de l'élément de forme allongée.

Selon une autre caractéristique de l'invention, la boîte comporte un tunnel de rangement de l'élément de forme allongée, la boîte présentant au moins une ouverture latérale traversée par une extrémité dudit élément de forme allongée de telle sorte que l'extrémité reste à l'extérieur de la boîte.

Selon une autre caractéristique de l'invention, la boîte est constituée par un récipient fermé par un couvercle, les bords du récipient et du couvercle comportant des échancrures en vis-à-vis formant un berceau de réception dudit élément de forme allongée, les deux extrémités de l'élément de forme allongée prenant place à l'extérieur de la boîte.

Selon encore une autre caractéristique de l'invention, le diamètre des ouvertures, formées par les échancrures, est inférieur au diamètre des extrémités de l'élément de forme allongée prenant place à l'extérieur de la boîte de sorte que la boîte est immobilisée axialement sur l'élément de forme allongée.

Selon encore une autre caractéristique de l'invention, le diamètre des ouvertures, formé par les échancrures, est légèrement supérieur au diamètre de l'élément de forme allongée à hauteur des ouvertures de manière à permettre une bonne aération de la boîte.

Selon encore une autre caractéristique de l'invention, l'élément de forme allongée est le pied de mixage, ce dernier étant amovible du boîtier moteur.

On comprendra mieux les buts, aspects et avantages de la présente invention, d'après la description donnée ci-après d'un mode particulier de réalisation de l'invention, présenté à titre d'exemple non limitatif, en se référant aux dessins annexés dans lesquels :
- la figure 1 est une vue de face d'un mixeur ménager comportant un boîtier moteur associé à un pied de mixage sur lequel est accouplé une boîte de rangement selon un mode particulier de réalisation de l'invention ;
- la figure 2 est une vue de côté de la boîte de rangement accouplé au pied de mixage de la figure 1, le pied de mixage étant représenté sans le boîtier moteur ;
- la figure 3 est une vue en perspective du dessus de la boîte de rangement lorsque cette dernière est ouverte et reçoit différents outils de travail ainsi que le pied de mixage de la figure 2 ;
- la figure 4 est une vue en perspective du dessous de la boîte de rangement, ouverte, représentée avec différents outils sortis de la boîte.

Seuls les éléments nécessaires à la compréhension de l'invention ont été représentés. Pour faciliter la lecture des dessins les mêmes éléments portent les mêmes références d'une figure à l'autre.

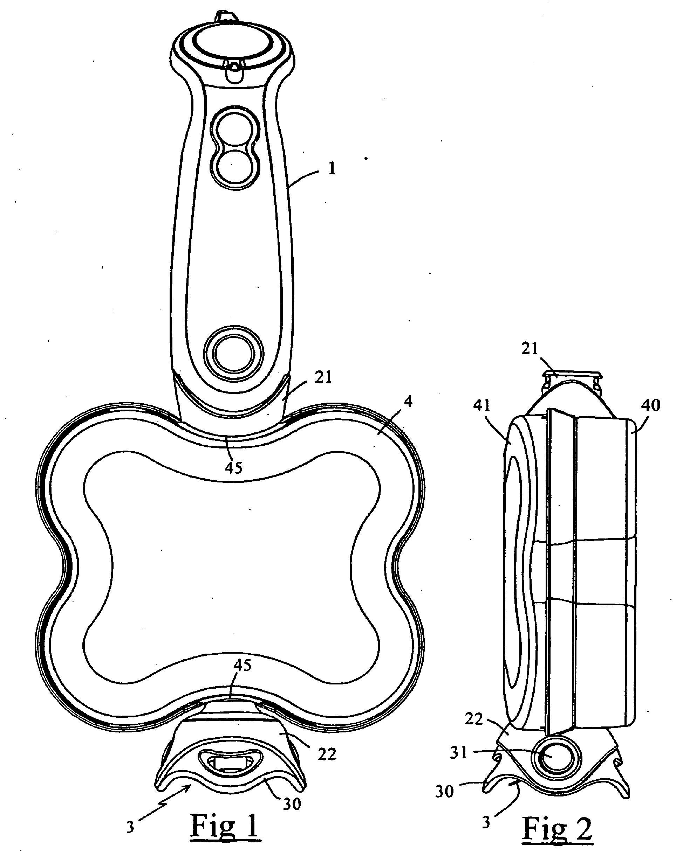

La figure 1 représente un mixeur ménager comportant un boîtier moteur 1 amovible accouplé, de manière connue en soi, à un pied de mixage 2 présentant la forme d'un fût tubulaire, réalisé avantageusement en acier inox, comportant une extrémité supérieure d'accouplement 21 évasée assurant le montage du pied de mixage 2 sur le boîtier moteur 1.

La partie inférieure du pied de mixage 2 comporte une cloche de protection 22 renfermant un outil de travail 3, tel un couteau rotatif, entraîné en rotation par le boîtier moteur 1.

L'outil de travail 3 est solidaire d'une coupelle de préhension 30 assurant une protection périphérique de l'outil de travail 3 et permettant de manipuler l'outil 3 sans toucher à ses parties coupantes, l'outil de travail 3 étant monté rotatif par rapport à la coupelle de préhension 30. La coupelle de préhension 30 vient se fixer à la surface de la cloche de protection 22 et présente une taille et une forme adaptées pour s'insérer à l'intérieur de la cloche de protection 22 en épousant la forme de cette dernière.

Un tel outil de travail 3 et les moyens utilisés pour assurer sa fixation sur la cloche de protection 22 sont en tous points semblables à ceux décrits, en détails, dans la demande de brevet FR 05 10120 déposée par la demanderesse. En particulier, la cloche de préhension 30 est immobilisée dans la cloche de protection 22 par deux bossages élastiques 31 venant s'engager dans des ouvertures adaptées de la cloche de protection 22.

Plus particulièrement selon l'invention, le mixeur ménager comporte une boîte de rangement 4 qui peut être accouplée à un élément de forme allongée, constitué dans cet exemple, par le pied de mixage 2.

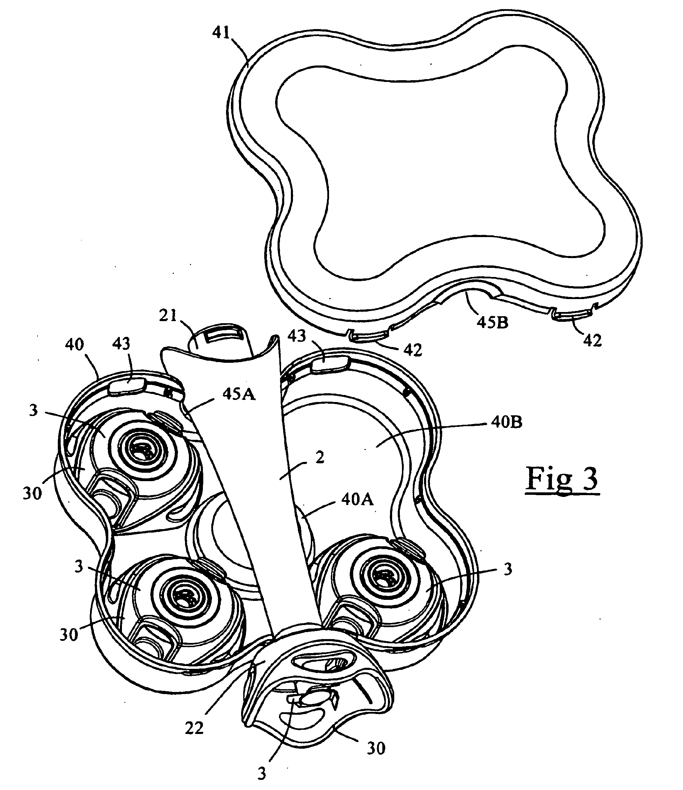

Conformément aux figures 2 à 4, cette boîte de rangement 4 est constituée par un récipient 40 fermé par un couvercle 41 amovible, le couvercle 41 comportant quatre languettes élastiques 42 munies de bossages venant s'engager dans des ouvertures 43 adaptées du récipient pour verrouiller le couvercle 41 en position fermée sur le récipient 40.

De manière avantageuse, le fond du récipient 40 présente un bossage central 40A autour duquel s'étend, symétriquement, quatre lobes, chaque lobe présentant un diamètre adapté pour servir de logement 40B à un outil de travail 3.

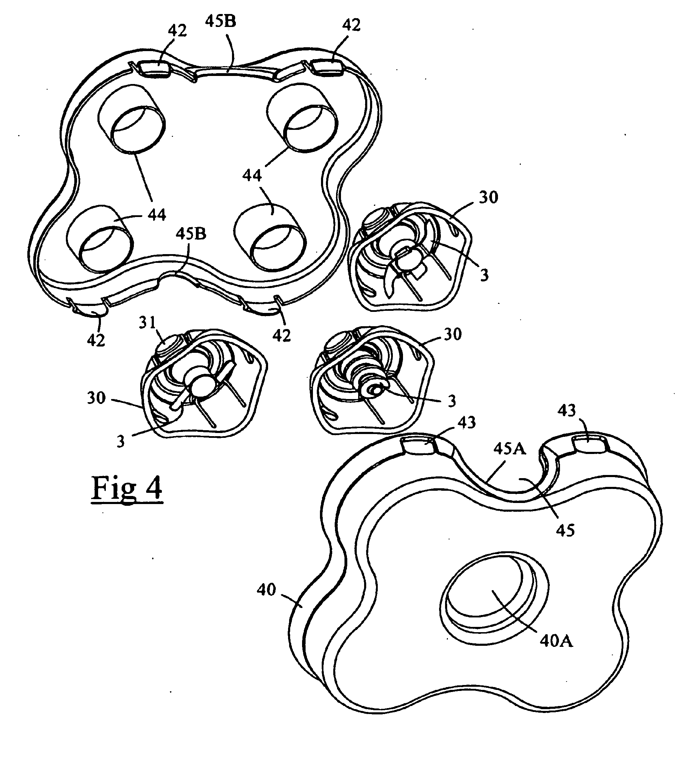

Conformément à la figure 4, le couvercle 41 comporte des manchons de centrage 44 disposés en regard de ces logements 40B, les manchons de centrage 44 s'étendant vers l'intérieur de la boîte 4 et venant prendre appui sur le sommet de la cloche de préhension 30 de l'outil de travail 3 pour immobiliser ce dernier dans la boîte de rangement 4 lorsque le couvercle 41 est fermé sur le récipient 40.

La boîte de rangement 4 comporte également deux ouvertures latérales 45 disposées en vis-à-vis pour former un tunnel de rangement du pied de mixage 2. Ces ouvertures latérales 45 sont constituées pour partie par une échancrure 45A sensiblement circulaire formée en bordure du récipient 40 et pour partie par une échancrure 45B sensiblement circulaire formée en bordure du couvercle 41.

Ces échancrures 45A, 45B du récipient et du couvercle forment un berceau de réception dans lequel le pied de mixage 2 peut être disposé en plaçant la cloche de protection 22 du pied de mixage 2 ainsi que l'extrémité supérieure d'accouplement 21 du pied de mixage à l'extérieur du récipient 4. La cloche de protection 22, ainsi que l'extrémité d'accouplement 21, présentent un diamètre supérieur au diamètre des ouvertures latérales 45 de sorte que le pied de mixage 2 se trouve immobilisé axialement dans son logement lorsque le couvercle 41 est fermé sur le récipient 40, en étant pris en sandwich entre ces derniers, ainsi que cela est représenté sur les figures 1 et 2.

Le diamètre des ouvertures 45 formé par les échancrures 45A, 45B est préférentiellement légèrement supérieur au diamètre des parties du pied de mixage 2 venant s'engager en regard de ces échancrures 45A, 45B de manière à laisser un espace autour du pied de mixage 2 permettant une circulation de l'air. Une telle caractéristique permet ainsi d'éviter la formation de moisissure à l'intérieur de la boîte 4 lorsque les outils de travail 3 sont stockés dans la boîte 4 encore humide, par exemple après avoir été lavés.

De manière préférentielle, l'épaisseur de la boîte 4 ainsi assemblée sur le pied de mixage 2 correspond sensiblement à la largeur du pied de mixage 2 de sorte que l'ensemble peut être facilement glissé dans un tiroir, une telle boîte présentant l'avantage d'être très compacte autour du pied de mixage 2.

La disposition à l'extérieur de la boîte des deux extrémités du pied de mixage présente l'avantage de permettre l'obtention d'une boîte de faible encombrement tout en conservant un ensemble solidaire, de sorte que les outils de travail et le pied de mixage ne risquent pas d'être dispersés.

La boîte ainsi réalisée permet donc de ranger jusqu'à quatre outils de travail dans un encombrement réduit, chaque outil de travail étant prévu pour réaliser une préparation spécifique.

Une telle boîte associée au pied de mixage peut également être stockée verticalement, par exemple dans un placard, en faisant reposer l'ensemble en équilibre sur l'une des extrémités du pied de mixage. Par exemple, un tel ensemble pourra reposer en équilibre sur la cloche de préhension, ainsi que cela est représenté sur les figures 1 et 2, en laissant l'un des outils accouplé à la cloche de protection.

Un tel ensemble présente également l'avantage de pouvoir être exposé ainsi assemblé, sans faire appel à des moyens de présentation onéreux, la boite de rangement pouvant avantageusement être fabriquée dans un matériaux transparent ou translucide pour laisser apparaître les différents outils. La boite de rangement présente également l'avantage de maintenir les outils autour du pied de mixage lorsque le produit est dans son emballage permettant ainsi d'éviter de faire appel à des moyens supplémentaires pour immobiliser ou protéger les outils.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, la boîte pourra être accouplée au boîtier moteur.

Ainsi, dans une variante de réalisation le pied de mixage pourra être solidaire du boîtier moteur.

## Revendications

1. Boîte de rangement (4) pour mixeur ménager de type plongeant, ledit mixeur comportant un boîtier moteur (1) et un pied de mixage (2) muni d'une cloche de protection (22) pouvant recevoir un outil de travail (3) amovible, **caractérisé en ce que** ladite boîte (4) définit un volume sensiblement fermé comportant un espace de rangement pouvant recevoir au moins un outil de travail (3), et comporte des moyens d'accouplement avec un élément de forme allongée, constitué par le boîtier moteur (1) ou par le pied de mixage (2), permettant l'accouplement de la boîte de rangement (4) dans une position dans laquelle la boîte (4) s'étend parallèlement à la direction longitudinale dudit élément de forme allongée (1, 2).

2. Boîte de rangement selon la revendication 1, **caractérisé en ce qu'**elle peut être accouplée à la partie centrale dudit élément dé forme allongée (1, 2).

3. Boîte de rangement selon l'une quelconque des revendications 1 à 2, **caractérisé en ce qu'**elle comporte un tunnel de rangement dudit élément de forme allongée (1, 2), la boîte (4) présentant au moins une ouverture latérale (45) traversée par une extrémité dudit élément de forme allongée (1, 2) de telle sorte que ladite extrémité reste à l'extérieur de ladite boîte (4).

4. Boîte de rangement selon l'une quelconque des revendications 1 à 3, **caractérisé en ce qu'**elle est constituée par un récipient fermé (40) par un couvercle (41), les bords du récipient (40) et du couvercle (41) comportant des échancrures (45A, 45B) en vis-à-vis formant un berceau de réception dudit élément de forme allongée (1,2), les deux extrémités dudit élément de forme allongée (1 , 2) prenant place à l'extérieur de ladite boîte (4).

5. Boîte de rangement selon la revendication 4, **caractérisé en ce que** le diamètre des ouvertures (45), formées par les échancrures (45A, 45B), est inférieur au diamètre des extrémités de l'élément de forme allongée (1,2) prenant place à l'extérieur de la boîte (4) de sorte que la boîte (4) est immobilisée axialement sur ledit élément de forme allongée (1, 2).

6. Boîte de rangement selon la revendication 5, **caractérisé en ce que** le diamètre des ouvertures (45), formées par lesdites échancrures (45A, 45B), est légèrement supérieur au diamètre de l'élément de forme allongée (1, 2) à hauteur desdites ouvertures (45) de manière à permettre une bonne aération de la boîte (4).

7. Boîte de rangement selon l'une quelconque des revendications 1 à 6, **caractérisé en ce que** ledit élément de forme allongée est le pied de mixage (2), ce dernier étant amovible du boîtier moteur (1).

## Claims

1. Storage case (4) for a household blender of the hand-held type, said blender comprising a motor housing (1) and a blender foot (2) equipped with a protective guard (22) capable of holding a removable working tool (3), **characterised in that** said case (4) defines a substantially enclosed volume comprising a storage space capable of holding at least one working tool (3), and comprises means of coupling with an elongated component, made up of the motor housing (1) or the blender foot (2), enabling the coupling of the storage case (4) in a position in which the case (4) extends parallel to the longitudinal direction of said elongated component (1, 2).

2. Storage case according to claim 1, **characterised in that** it can be coupled to the central part of said elongated component (1, 2).

3. Storage case according to any one of claims 1 to 2, **characterised in that** it comprises a storage tunnel for said elongated component (1, 2), the case (4) having at least one lateral opening (45) through which one end of said elongated component (1, 2) passes, in such a way that said end remains outside said case (4).

4. Storage case according to any one of claims 1 to 3, **characterised in that** it is made up of a container (40) closed by a lid (41), the edges of the container (40) and the cover (41) comprising facing recesses (45A, 45B) forming a cradle to hold said elongated component (1, 2), the two ends of said elongated component (1, 2) being located outside said case (4).

5. Storage case according to claim 4, **characterised in that** the diameter of the openings (45) formed by the recesses (45A, 45B) is smaller than the diameter of the ends of the elongated component (1, 2) located outside the case (4) in such a way that the case (4) is axially immobilised on said elongated component (1, 2).

6. Storage case according to claim 5, **characterised in that** the diameter of the openings (45) formed by said recesses (45A, 45B) is slightly larger than the diameter of the elongated component (1, 2) at the level of said openings (45) in order to allow for satisfactory ventilation of the case (4).

7. Storage case according to any one of claims 1 to 6, **characterised in that** said elongated component is the blender foot (2), the latter being removable from the motor housing (1).

## Patentansprüche

1. Aufbewahrungsbox (4) für einen Haushaltsmixer der Sorte Stabmixer, wobei der Mixer ein Motorgehäuse (1) und einen Mixstab (2) umfasst, der mit einer Schutzglocke (22) ausgestattet ist, die ein abnehmbares Arbeitswerkzeug (3) aufnehmen kann, **dadurch gekennzeichnet, dass** die Box (4) ein im Wesentlichen geschlossenes Volumen definiert, das einen Aufbewahrungsraum umfasst, der mindestens ein Arbeitswerkzeug (3) aufnehmen kann, und Mittel für die Kopplung mit einem länglich geformten Element umfasst, das vom Motorgehäuse (1) oder vom Mixstab (2) gebildet wird, wodurch die Kopplung der Aufbewahrungsbox (4) in einer Position ermöglicht wird, in der sich die Box (4) parallel zur Längsrichtung des länglich geformten Elements (1, 2) erstreckt.

2. Aufbewahrungsbox nach Anspruch 1, **dadurch gekennzeichnet, dass** sie an den Mittelteil des länglich geformten Elements (1,2) gekoppelt werden kann.

3. Aufbewahrungsbox nach einem der Ansprüche 1 bis 2, **dadurch gekennzeichnet, dass** sie einen Aufbewahrungskanal für das länglich geformte Element (1, 2) umfasst, wobei die Box (4) mindestens eine seitliche Öffnung (45) aufweist, die von einem Ende des länglich geformten Elements (1, 2) passiert wird, so dass das Ende außerhalb der Box (4) verbleibt.

4. Aufbewahrungsbox nach einem der Ansprüche 1 bis 3, **dadurch gekennzeichnet, dass** sie von einem Behälter (40) gebildet wird, der von einem Deckel (41) verschlossen wird, wobei die Ränder des Behälters (40) und des Deckels (41) gegenüberliegende Ausschnitte (45A, 45B) umfassen, die eine Aufnahmemulde für das länglich geformte Element (1,2) bilden, wobei die beiden Enden des länglich geformten Elements (1,2) außerhalb der Box (4) angeordnet sind.

5. Aufbewahrungsbox nach Anspruch 4, **dadurch gekennzeichnet, dass** der Durchmesser der Öffnungen (45), die von den Ausschnitten (45A, 45B) gebildet werden, kleiner ist als der Durchmesser der Enden des länglich geformten Elements (1,2), die außerhalb der Box (4) angeordnet sind, so dass die Box (4) axial auf dem länglich geformten Element (1, 2) fixiert wird.

6. Aufbewahrungsbox nach Anspruch 5, **dadurch gekennzeichnet, dass** der Durchmesser der Öffnungen (45), die von den Ausschnitten (45A, 45B) gebildet werden, leicht größer ist als der Durchmesser des länglich geformten Elements (1, 2) auf Höhe der Öffnungen (45), um eine gute Belüftung der Box (4) zu ermöglichen.

7. Aufbewahrungsbox nach einem der Ansprüche 1 bis 6, **dadurch gekennzeichnet, dass** das länglich geformte Element der Mixstab (2) ist, wobei dieser Letztere vom Motorgehäuse (1) abnehmbar ist.
